# FASCICULE DE BREVET EUROPEEN

(11) **EP 1 556 681 B1**
(45) Date de publication et mention de la délivrance du brevet: **03.06.2020**
(21) Numéro de dépôt: 03780242.8
(22) Date de dépôt: 28.10.2003
(51) Int. Cl.: G01N 21/64, G01N 21/77, G02B 6/42

(54) **DISPOSITIF DE SUPPORT D'ELEMENTS CHROMOPHORES**
CHROMOPHORTRÄGERVORRICHTUNG
DEVICE FOR SUPPORTING CHROMOPHORIC ELEMENTS

(30) Priorité: 30.10.2002 FR 0213627
(43) Date de publication de la demande: 27.07.2005
(73) Titulaire: Genewave, 91000 Evry (FR)
(72) Inventeur: WEISBUCH, Claude, F-75013 Paris (FR)
(74) Mandataire: Jacobacci Coralis Harle
(86) Numéro de dépôt international: PCT/FR2003/003214
(87) Numéro de publication internationale: WO 2004/042376

(56) Documents cités:
- WO-A-02/16912
- WO-A1-93/05365
- FR-A- 2 793 560
- US-A- 5 577 137
- US-A- 6 137 117
- US-A1- 2002 110 839
- BENISTY H ET AL: "OPTICAL AND CONFINEMENT PROPERTIES OF TWO-DIMENSIONAL PHOTONIC CRYSTALS" JOURNAL OF LIGHTWAVE TECHNOLOGY, IEEE. NEW YORK, US, vol. 17, no. 11, novembre 1999 (1999-11), pages 2063-2077, XP001004762 ISSN: 0733-8724 cité dans la demande

## Description

L'invention concerne un dispositif de support d'éléments chromophores tel notamment que ceux communément appelés "bio-puces".

Dans ces dispositifs, un substrat en général multicouche porte des éléments chromophores qui sont des molécules chimiques ou biologiques, des éléments colorants ajoutés ou greffés à des molécules chimiques ou biologiques, ou des nanostructures semi-conductrices telles que des fils ou des boîtes quantiques et qui émettent une fluorescence dont la longueur d'onde dépend de leur nature, quand ils sont excités par une lumière appropriée. Cette fluorescence permet notamment d'identifier et de repérer sur le substrat des molécules qui ont réagi à des traitements donnés.

On a déjà proposé, dans les demandes WO-A-02516912, FR0115140 et FR0210285 des mêmes inventeurs, des moyens permettant de renforcer l'intensité d'excitation des éléments chromophores et celle de la fluorescence émise par ces éléments. Il a été notamment envisagé d'utiliser un mode guidé de la lumière d'excitation pour exciter les éléments chromophores par la partie évanescente de l'onde guidée, ce qui est intéressant au niveau du rapport signal/bruit et de la réjection de la lumière d'excitation. Dans la technique connue, il a été proposé de coupler la lumière d'excitation dans une couche guidante du substrat, soit par éclairage d'un réseau formé à la surface de cette couche guidante, soit par éclairage d'une tranche de la couche guidante par la lumière d'excitation.

Dans le premier cas, le couplage n'est réalisé que si la lumière d'excitation arrive sur le réseau avec un angle d'incidence déterminé de façon très précise, cet angle variant avec la longueur d'onde à coupler. Le montage doit donc être réalisé avec une grande précision mécanique et optique. Dans le second cas, le faisceau d'éclairage de la tranche de la couche guidante doit avoir une dimension correspondant à la largeur ou hauteur effective du mode guidé, qui est d'un micromètre ou moins et il doit donc être positionné avec une tolérance inférieure au micromètre.

Les difficultés pratiques liées au couplage de la lumière d'excitation dans une couche guidante du substrat sont donc importantes.

L'invention a notamment pour but d'apporter une solution simple et efficace à ce problème.

Elle propose à cet effet un dispositif du type biopuce comprenant un substrat dont une couche superficielle forme un guide d'onde planaire, ladite couche superficielle portant des éléments chromophores dans une zone de support des éléments chromophores, lesdits éléments chromophores étant propres à émettre une fluorescence en réponse à une excitation lumineuse, le guide d'onde planaire contenant des constituants photoluminescents propres à émettre une luminescence à une ou à des longueurs d'onde d'excitation des éléments chromophores quand ils sont eux-mêmes excités par une lumière d'excitation primaire, cette luminescence émise par ces constituants étant guidée dans le guide d'onde planaire pour l'excitation des éléments chromophores dans le plan du guide d'onde planaire.

Dans le dispositif selon l'invention, la lumière d'excitation des éléments chromophores est générée dans le guide d'onde planaire lui-même, ce qui évite tous les problèmes de couplage de cette lumière dans le guide d'onde. De plus, cette lumière d'excitation est elle-même produite par éclairage direct (non guidé) de la partie du guide d'onde dont on souhaite exciter les constituants photoluminescents, ce qui peut se faire de façon ordinaire avec une tolérance assez large, qui est typiquement supérieure à 10 µm.

Les constituants photoluminescents du dispositif selon l'invention peuvent être de natures très diverses et comprennent notamment des polymères, des molécules organiques, des ions luminescents, des boîtes quantiques ou sont formés dans une structure hétérogène semi-conductrice multicouche.

Dans ce cas, différentes configurations sont possibles : on peut notamment avoir une zone comportant des constituants photoluminescents entre deux zones de support des éléments chromophores, ou bien deux zones contenant des constituants photoluminescents qui entourent une zone de support des éléments chromophores, ou encore une zone contenant des constituants photoluminescents et qui s'étend sur le pourtour de la couche guidante, avec à l'intérieur une ou plusieurs zones contenant des constituants photoluminescents.

On peut combiner ces diverses configurations avec un éclairage sélectif des zones contenant les constituants photoluminescents par la lumière d'excitation primaire.

En variante, les constituants photoluminescents peuvent être répartis de façon sensiblement uniforme sur toute la surface de la couche guidante, et on éclaire alors sélectivement certaines zones de cette surface par la lumière d'excitation primaire.

Selon une autre caractéristique de l'invention, des moyens de filtrage en longueur d'onde sont prévus dans le guide d'onde planaire pour éliminer de la lumière émise par les constituants photoluminescents, les longueurs d'onde qui sont identiques à ou voisines de celles de la fluorescence émise par les éléments chromophores.

On améliore ainsi le rapport signal/bruit de la fluorescence émise par les éléments chromophores et captée par des moyens optiques adéquats.

Ces moyens de filtrage sont de préférence situés entre des zones du guide d'onde planaire comportant des constituants photoluminescents et des zones de support des éléments chromophores.

Ces moyens de filtrage peuvent comprendre des séries de rainures formées dans le guide d'onde planaire, des cristaux photoniques fonctionnant dans le plan du guide d'onde ou des cavités optiques formées dans le plan du guide d'onde par confinement entre des tranchées ou des cristaux photoniques.

En variante, les moyens de filtrage peuvent être formés par des matériaux inclus dans le guide d'onde planaire et absorbant les longueurs d'onde identiques à ou voisines de celles de la fluorescence émise par les éléments chromophores.

Ces constituants absorbants peuvent être des colorants du type de ceux utilisés dans les filtres colorés, qui ont un rendement de luminescence particulièrement faible dans les bandes spectrales considérées et qui convertissent en chaleur la lumière parasite guidée.

Selon encore une autre variante, qui tire profit du fait que la longueur d'onde d'excitation des éléments chromophores est inférieure à la longueur d'onde de la fluorescence émise par ces éléments, le filtrage est réalisé par le guide d'onde planaire lui-même, celui-ci ayant une longueur d'onde de coupure du mode guidé qui est comprise entre la longueur d'onde d'excitation des éléments chromophores et celle de la fluorescence émise par ces éléments.

Le dispositif selon l'invention comprend encore des moyens permettant d'augmenter la quantité de luminescence guidée parvenant aux zones de support des éléments chromophores. On peut en particulier réfléchir vers ces zones la luminescence guidée ou la faire passer plusieurs fois dans ces zones. Pour cela, il est possible de recouvrir la tranche de la couche guidante avec un métal tel par exemple que l'aluminium, l'argent, l'or, etc., ou d'incorporer des réflecteurs dans le guide d'onde planaire, ces réflecteurs pouvant être constitués d'une rainure, d'une série périodique de plusieurs rainures formant un réflecteur du type DBR (Distributed Bragg Reflector) dont une bande de réflectivité est à la longueur d'onde d'excitation des éléments chromophores pour les angles d'incidence du mode guidé considéré, ou bien d'un cristal photonique bidimensionnel.

La production de la luminescence guidée à partir de la lumière d'excitation primaire peut également être augmentée par les moyens suivants :
- une couche ou une zone réfléchissante située sous la couche ou la zone contenant des constituants photoluminescents,
- la disposition des constituants photoluminescents à un ventre d'un mode de cavité vertical pour soumettre ces constituants à une intensité d'excitation maximale, les deux miroirs délimitant la cavité étant choisis pour optimiser la conversion,
- une structuration photonique, telle que des cavités, formées autour des zones contenant les constituants photoluminescents de façon à ce que l'émission guidée ait lieu dans des modes de cavités.

On peut également coupler de façon optimale l'émission luminescente des constituants précités au mode guidé, en utilisant les moyens suivants :
- les zones contenant les constituants photoluminescents sont situées à un niveau d'anti-résonance en émission verticale (perpendiculaire au guide d'onde planaire) ce qui permet de réduire l'émission en direction verticale au profit de l'émission guidée,
- les zones contenant les constituants photoluminescents sont placées sous une couche réfléchissante, par exemple métallique, à une distance correspondant à l'inhibition de l'excitation des modes verticaux sur une grande plage angulaire. Dans ce cas, la lumière d'excitation primaire éclaire la face du substrat opposée à celle comportant la couche réfléchissante précitée.

Le dispositif selon l'invention peut bien entendu comprendre diverses sortes de constituants photoluminescents qui émettent sur des longueurs d'onde différentes quand ils sont excités, pour assurer l'excitation sur différentes longueurs d'onde de diverses sortes d'éléments chromophores. Dans ce cas, une seule lumière d'excitation primaire ou plusieurs lumières d'excitation primaire ayant des bandes spectrales différentes peuvent être utilisées pour exciter les constituants photoluminescents.

Les constituants photoluminescents différents peuvent être regroupés par nature et former des régions distinctes différentes, associées à des réflecteurs et des moyens de filtrage du type précité.

Ces régions peuvent également être superposées dans le plan de la couche guidante, en étant disposées à des hauteurs différentes dans cette couche.

Les constituants photoluminescents de natures différentes peuvent aussi être mélangés et répartis dans toute la couche guidante dans des proportions choisies en fonction de la puissance lumineuse souhaitée pour chaque espèce.

Pour éviter que la lumière d'excitation primaire et la luminescence non guidée qui peuvent être diffusées via le substrat parviennent à constituer un signal de fond dommageable, on peut disposer sur une partie ou sur la totalité du substrat une couche absorbante située sous le guide d'onde planaire et consommant les photons émis depuis ce guide d'onde.

On peut aussi utiliser dans le dispositif selon l'invention les moyens décrits dans la demande FR0210285 précitée des mêmes inventeurs, et notamment ceux relatifs aux structurations des plages de support des éléments chromophores qui permettent de distinguer un signal utile d'un bruit de fond global.

De façon générale et comme décrit dans la demande antérieure WO-A-0216912 des mêmes inventeurs, la fluorescence émise par les éléments chromophores peut être captée soit depuis le dessus du dispositif selon l'invention avec un objectif d'ouverture numérique donnée, soit depuis le dessous de ce dispositif en utilisant une matrice de photodétecteurs du type CCD ou CMOS qui fait partie du substrat.

L'invention s'applique aussi au format des micro-plaques (format "SBS") par exemple à 24, 96, 384 ou 1536 puits, où l'emplacement des éléments photoluminescents et des moyens de filtrage est adapté à la géométrie de la micro-plaque et des puits.

Elle s'applique également au format des lames de microscope comportant des micropuits, réalisés par dépôt d'une couche de plusieurs dizaines de µm d'épaisseur avec des orifices formant les micropuits (par exemple traitement HTC de type TEFLON ® de marque Cel-Line commercialisé par Erie Scientific Corp, Portsmouth, NH). Les différents puits peuvent être utilisés comme zones d'hybridation séparées destinées à des échantillons de test différents.

Le dispositif précité peut aussi être utilisé dans un milieu liquide contenant des éléments chromophores en suspension et des particules diffusantes.

Dans ce milieu liquide, seuls les éléments chromophores immobilisés sur la surface du dispositif sont excités par la partie évanescente de l'onde guidée, et non les éléments chromophores en suspension, ce qui améliore considérablement le rapport signal/bruit et permet de mesurer le signal d'hybridation résolu dans le temps.

L'invention sera mieux comprise et d'autres caractéristiques, détails et avantages de celle-ci apparaîtront plus clairement à lecture de la description qui suit, faite à titre d'exemple en référence aux dessins annexés dans lesquels :
- les figures 1 et 2 sont des vues schématiques en coupe et de dessus respectivement d'un premier mode de réalisation d'un dispositif selon l'invention ;
- les figures 3 à 6 sont des vues schématiques en coupe illustrant des variantes de réalisation de ce dispositif ; - la figure 7 illustre une variante qui ne fait pas partie de l'invention;
- les figures 8 et 9 sont des vues schématiques de dessus représentant d'autres variantes de réalisation du dispositif selon l'invention ;
- la figure 10 est une vue schématique en coupe du dispositif de la figure 9 ;
- les figures 11 et 12 sont des vues schématiques en coupe représentant deux étapes de fabrication d'un dispositif selon l'invention ;
- la figure 13 est une vue schématique en coupe représentant une autre variante de réalisation du dispositif selon l'invention.

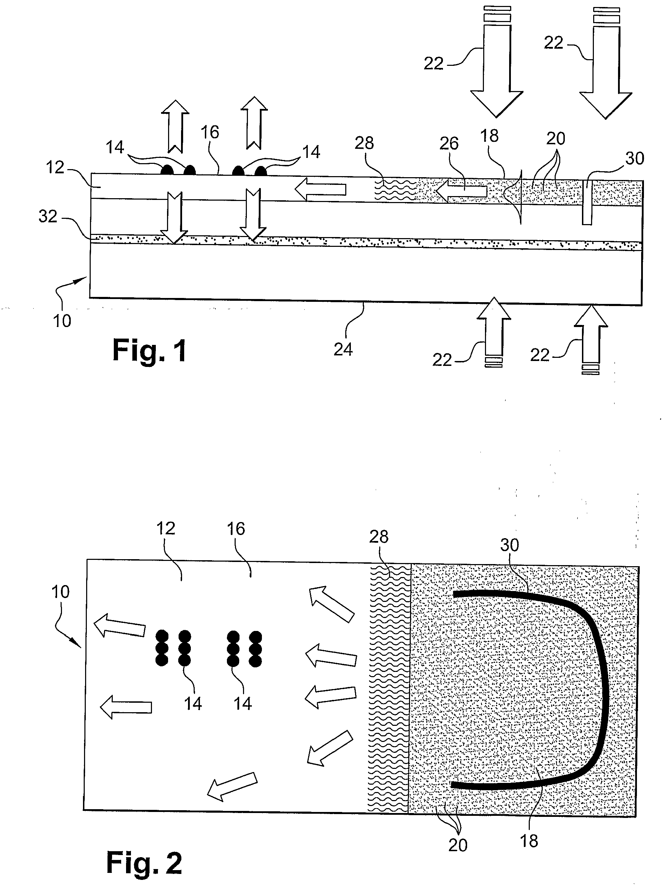

Le dispositif représenté aux figures 1 et 2 comprend un substrat 10 d'un type classique dont une couche supérieure 12 destinée à porter des éléments chromophores 14 sur une partie 16 de sa surface est réalisée en un matériau ayant un indice de réfraction élevé, par exemple supérieur à 1,6 environ, et forme un guide d'onde planaire.

Une partie 18 de cette couche 12, adjacente à celle 16 destinée à porter les éléments chromophores 14, contient des constituants photoluminescents 20 qui émettent une luminescence en mode guidé dans la couche 12 lorsqu'ils sont excités par une lumière d'excitation primaire 22 qui éclaire directement soit la partie 18 de la couche 12 contenant les constituants photoluminescents 20, soit la face opposée 24 du substrat 10 comme représenté schématiquement en figure 1.

Les composants photoluminescents 20 sont choisis pour émettre, quand ils sont excités par la lumière 22, une luminescence aux longueurs d'onde d'excitation des éléments chromophores 14. Ces derniers sont alors excités par la partie évanescente de la luminescence guidée 26 qui se propage dans la couche 12.

Les constituants photoluminescents 20 que contient la couche 12 comprennent par exemple :
- des polymères luminescents, notamment tels que ceux développés pour les OLEDs (diodes électroluminescentes organiques),
- des molécules organiques supportant l'inclusion dans une matrice de polymère, de silice ou d'oxyde élaboré par voie sol-gel, l'inclusion pouvant être physique ou chimique (liaison covalente) ou électrostatique,
- des ions luminescents, notamment à base des métaux de transition ou de terres rares,

- des boîtes quantiques, notamment à base de semi-conducteurs II-VI ou III-V, qui peuvent être fonctionnalisés chimiquement en surface pour une meilleure incorporation,
- une hétérostructure semi-conductrice comprenant des couches (puits, fil ou boîte quantique).

Ces constituants photoluminescents sont éclairés par la lumière d'excitation primaire 22 avec une tolérance mécanique et optique relativement large, supérieure à 10 µm. Lorsque les longueurs d'onde d'excitation des éléments chromophores 14 sont de l'ordre de 500 à 650 nm par exemple, les longueurs d'onde de la lumière d'excitation primaire 22 peuvent être comprises entre 350 nm ou moins et 500 nm environ.

La luminescence guidée 26 émise par les constituants photoluminescents 20 a une bande spectrale relativement large du fait qu'elle est produite par émission spontanée des constituants 20, et peut comporter une intensité de luminescence non nulle aux longueurs d'onde de la fluorescence émise par les éléments chromophores 14. Il faut donc la filtrer spectralement pour la débarrasser des longueurs d'onde identiques ou voisines de celles de la fluorescence émise, qui pourraient constituer (après diffusion hors du guide due notamment aux irrégularités de ce dernier) un bruit de fond gênant dans la collecte de la fluorescence émise par les éléments 14.

On peut pour cela interposer dans la couche 12, entre la région 18 comprenant les constituants photoluminescents 20 et la région 16 portant les éléments chromophores 14, un filtre spectral 28 agissant sur la luminescence guidée 26, ce filtre pouvant être formé par une série de rainures de la couche 12 ou encore par des cristaux photoniques fonctionnant dans le plan ou également par des cavités optiques formées dans le plan de la couche 12 par confinement entre des tranchées ou des cristaux photoniques.

En variante, on peut concevoir la couche guidante 12 de telle sorte que sa longueur d'onde de coupure du mode guidé utile (par exemple de polarisation TE) soit comprise entre la longueur d'onde d'excitation des éléments chromophores 14 et la longueur d'onde de la fluorescence émise par ces éléments. Un guide asymétrique en termes de profil d'indice se prête bien à un tel fonctionnement. De cette façon, les longueurs d'onde comprises entre la longueur d'onde de coupure de la couche guidante 12 et la longueur d'onde de la fluorescence émise ne sont pas guidées par la couche 12, la lumière produite à ces longueurs d'onde s'éloigne du plan du guide sur des dimensions latérales faibles et le champ électromagnétique associé devient négligeable dans la zone utile où se trouvent les éléments chromophores 14.

En variante, on peut réaliser ce filtrage par inclusion dans la couche 12 de composants absorbants aux longueurs d'onde supérieures aux longueurs d'onde d'excitation des éléments chromophores 14 et notamment aux longueurs d'onde voisines de celles de la fluorescence émise par les éléments 14. Le coefficient d'absorption modal du mode guidé peut avoir une valeur relativement élevée (10 à 1000 cm⁻¹) sans que l'émission des éléments chromophores 14 soit affectée. Ces composants absorbants peuvent être des colorants tels que ceux utilisés dans les filtres colorés, et ayant un rendement de luminescence particulièrement faible dans les bandes spectrales considérées, de façon à convertir en chaleur la lumière parasite guidée.

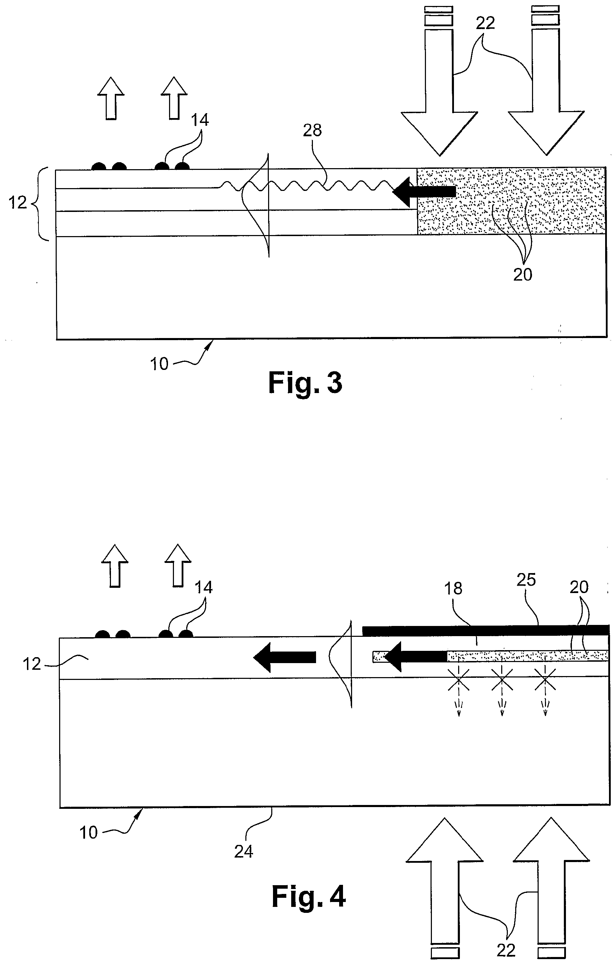

La figure 3 représente schématiquement une réalisation dans laquelle le filtre spectral 28 est constitué par une série de rainures peu prononcées (de faible profondeur), du type sinusoïdal par exemple et/ou à contraste d'indice faible, qui sont formées en surface ou dans une ou des sous-couches intermédiaires ayant des indices différents du guide d'onde planaire 12, le réseau formé par ces rainures étant représenté "enterré" dans le guide d'onde 12 en figure 3.

Quand les constituants photoluminescents 20 sont éclairés par la lumière d'excitation primaire 22 à travers le substrat 10, depuis sa face 24 opposée à celle destinée à porter les éléments chromophores 14, il est avantageux que les zones 18 contenant les constituants photoluminescents soient placées sous une couche réfléchissante 25, par exemple métallique, à un niveau qui correspond à un nœud de résonance verticale pour la luminescence émise, comme représenté schématiquement en figure 4.

Pour augmenter la quantité de luminescence guidée 26 parvenant dans la zone utile 16 portant les éléments chromophores 14, on peut incorporer dans la zone 18 de la couche 12 un réflecteur 30 (figures 1 et 2) qui dans cet exemple est constitué d'une simple rainure creusée dans la couche 12 et formant un U dans le plan de cette couche, le U étant ouvert en direction de la zone 16 pour renvoyer vers celle-ci une quantité maximale de luminescence guidée 26. Les largeurs de rainure sont typiquement comprises entre λ/10 et λ/3.

En variante, ce réflecteur peut être formé d'une série périodique de deux ou trois rainures ou davantage, formant un réflecteur du type DBR dont une des bandes de réflectivité est à la longueur d'onde d'excitation des éléments chromophores 14 pour les angles d'incidence du mode guidé considéré.

Dans une autre variante, le réflecteur peut être formé d'un cristal photonique bidimensionnel dont les bandes interdites sont utilisées dans les polarisations et directions considérées (voir l'article de BENISTY et al)., "Optical and confinement properties of two dimensional photonic crystals", J. Lightwave Technology, vol. 17, p. 2063-2077, 1999).

Dans tous les cas, ce réflecteur est formé sur toute l'épaisseur de la couche guidante 12 pour augmenter la réflectivité vis-à-vis du mode guidé. Un avantage de ce réflecteur est de définir une forme incurvée appropriée de surface réfléchissante, permettant d'obtenir une distribution souhaitée de luminescence guidée (cette distribution pouvant être uniforme ou non) tout en conservant un support de forme parallélépipédique. Un avantage de l'utilisation d'un cristal photonique bidimensionnel est également que l'effet de diffraction à certaines incidences et longueurs d'onde permet de renforcer le caractère aléatoire de la distribution de la luminescence guidée. Toutefois, si l'on dispose d'une source de luminescence guidée de grande puissance par unité de surface, ayant une petite dimension latérale de l'ordre du millimètre, on peut, avec un réflecteur parabolique 30 formé dans la couche guidante 12, obtenir un faisceau guidé sensiblement collimaté de grande largeur (5 - 50 mm environ), ce qui peut être avantageux au niveau du traitement ultérieur de la luminescence guidée notamment par des filtres. Les caractéristiques de ces filtres dépendent de l'incidence du mode guidé, ce qui conduit à des fuites ou des réflexions indésirables lorsque la lumière à filtrer se propage suivant une large gamme d'angles d'incidence.

On peut encore, comme représenté en figure 1, prévoir dans le substrat 10, sous une partie au moins de la couche 12, une couche absorbante 32 qui va consommer tous les photons émis depuis la couche 12 par diffusion de la lumière d'excitation primaire 22 et/ou de la luminescence non guidée produite par les constituants photoluminescents 20 aux longueurs d'onde d'excitation des éléments chromophores 14, cette lumière diffusée étant susceptible de constituer un signal de fond gênant.

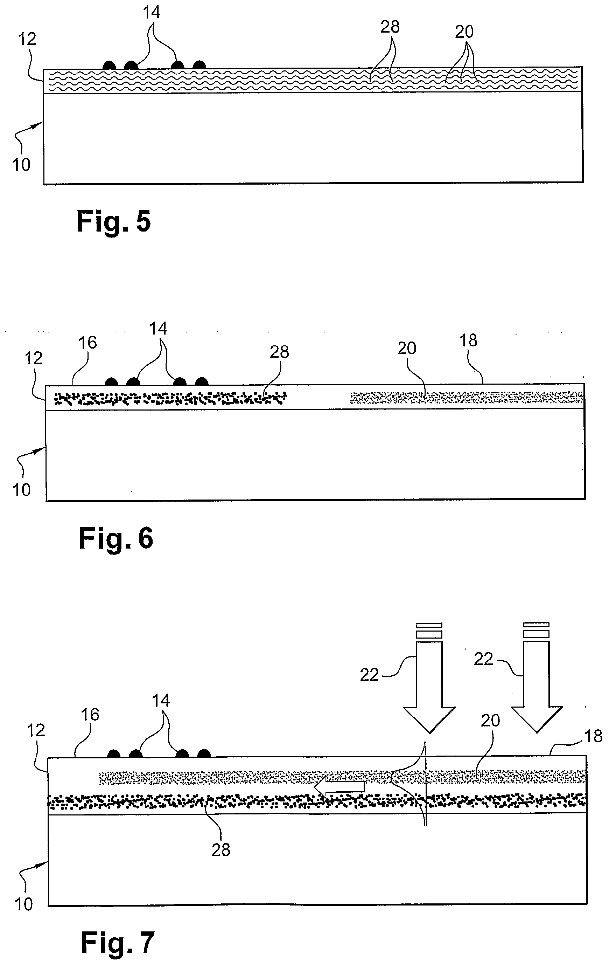

Dans la variante de réalisation représentée schématiquement en figure 5, la couche guidante 12 du substrat 10 portant les éléments chromophores 14 contient des constituants fluorescents 20 et des composants absorbants (ceux du filtre 28 des figures 1 et 2) qui sont mélangés entre eux et répartis de façon relativement uniforme dans toute la couche guidante 12.

Dans la variante de réalisation de la figure 6, les composants absorbants du filtre 28 sont inclus dans la partie 16 de la couche guidante 12 portant les éléments chromophores 14 et forment une couche sensiblement continue dans cette région 16, tandis que les constituants 20 photoluminescents sont inclus dans l'autre région 18 de la couche 12 et forment une couche sensiblement continue dans cette région.

Dans la variante de réalisation de la figure 7, les constituants photoluminescents 20 et les composants absorbants du filtre 28 forment dans la couche 12 deux couches intermédiaires superposées, la couche comportant les composants photoluminescents 20 étant située directement sous les éléments chromophore 14 et l'ensemble de ces deux couches formant un guide d'onde planaire. La luminescence émise par les constituants 20 est guidée dans ce guide d'onde et ses composantes aux longueurs d'onde de la fluorescence émise par les éléments 14 sont absorbées par la couche 28.

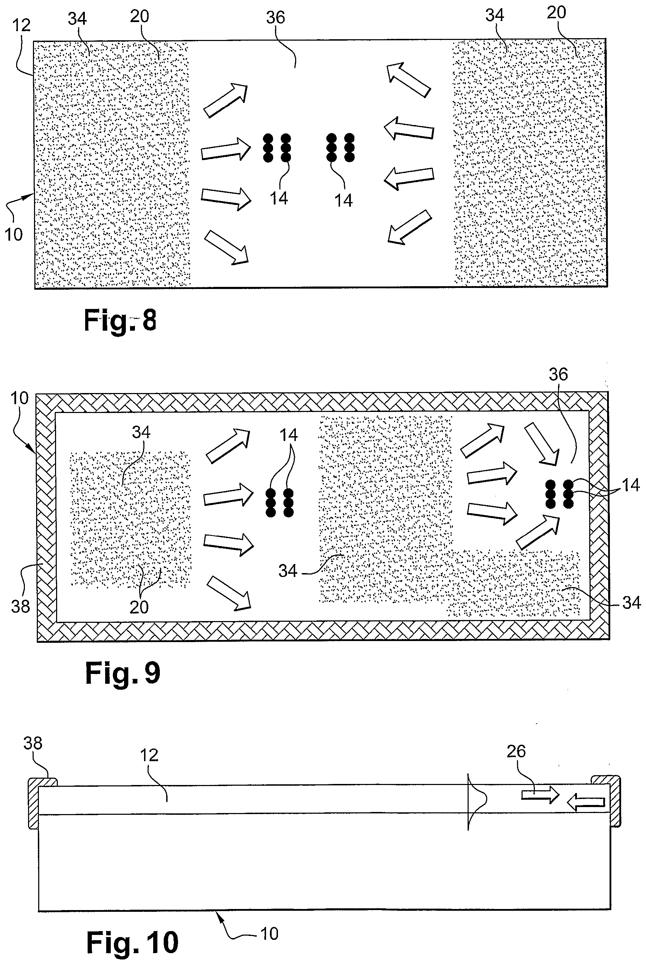

Dans encore une autre variante de réalisation représentée en figure 8, les constituants photoluminescents 20 peuvent être regroupés dans le plan de la couche guidante 12 en zones 34 situées de part et d'autre d'une zone centrale 16 portant les éléments chromophores 14.

En variante, on peut bien entendu avoir la disposition inverse, c'est-à-dire une zone centrale comportant des constituants photoluminescents 20 et deux zones latérales portant les éléments chromophores 14 et situées de part et d'autre de cette zone centrale.

Dans la variante de réalisation des figures 9 et 10, on a représenté une disposition dans laquelle les zones 34 contenant les constituants photoluminescents 20 et les zones 36 portant les éléments chromophores 14 sont entourées d'un réflecteur 38 formé par un revêtement métallique de la tranche de la couche guidante 12, sur tout son pourtour. Ce revêtement métallique est par exemple en aluminium, en argent, en or, etc. et empêche la lumière de s'échapper par la tranche de la couche 12.

De façon générale, seules les parties de la couche 12 comportant des zones 34 de constituants photoluminescents peuvent être éclairées par la lumière d'excitation primaire 22. Lorsque ces constituants photoluminescents sont répartis dans la totalité de la couche 12, comme c'est le cas des modes de réalisation des figures 5 et 7, seules certaines parties de la couche 12 sont éclairées par la lumière d'excitation primaire 22, comme représenté schématiquement en figure 7.

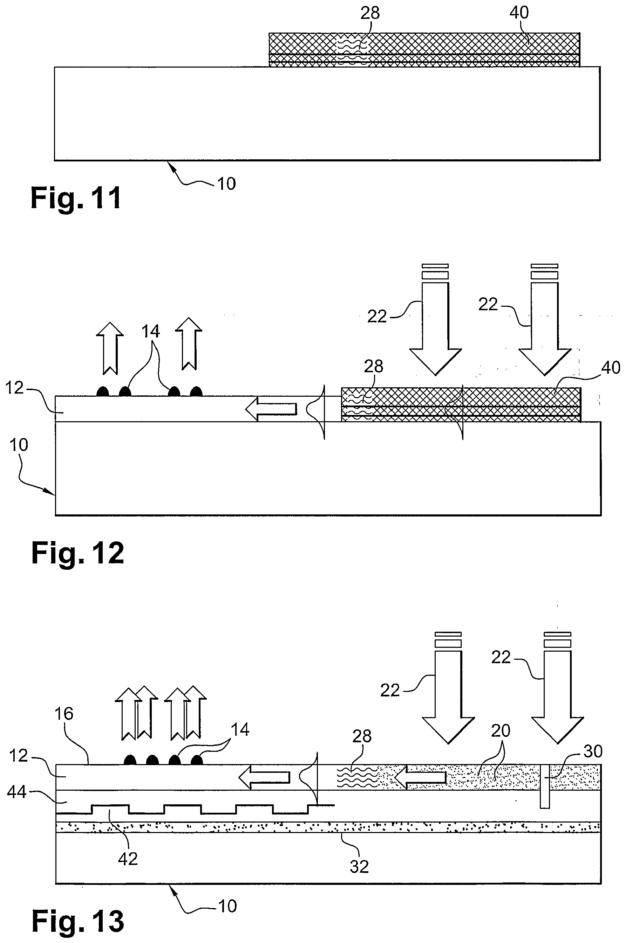

Dans la forme de réalisation des figures 11 et 12, le substrat 10 porte une hétérostructure 40 semi-conductrice qui constitue un guide d'onde et comprend un filtre 28 incorporé et des puits luminescents qui sont inclus dans une partie de cette structure 40. Ces puits sont avantageusement formés sur une partie seulement de l'hétérostructure par une méthode de croissance perfectionnée telle que celle connue sous la dénomination SAG (Selective Area Growth), ce qui permet de ne pas avoir de réabsorption au-delà de cette partie.

En variante, un film semi-conducteur peut être déposé sur le substrat 10, puis découpé par des procédés de lithographie standard pour ne laisser subsister que des emplacements qui seront effectivement éclairés par la lumière d'excitation primaire. La figure 11 illustre schématiquement la première étape avant découpe.

Une couche guidante 12 est ensuite formée sur le substrat 10 (figure 12) par exemple par un procédé de "lift-off", cette couche guidante 12 étant couplée optiquement avec la structure 40 ou avec le film semi-conducteur précité.

Dans la variante de réalisation de la figure 13, la structure représentée correspond sensiblement à celle des figures 1 et 2, mais le substrat 10 comprend de plus, sous la zone 16 portant les éléments chromophores 14, une couche intermédiaire 42 structurée, qui est partiellement ou totalement réfléchissante pour la fluorescence émise par les éléments chromophores 14 et qui est disposée entre la couche absorbante et la couche guidante 12 et comporte des zones d'épaisseur ou de hauteur différente permettant de faire varier, par interférence destructive ou constructive, l'intensité de la fluorescence émise par les éléments chromophores 14. Cette couche intermédiaire 42 est recouverte d'une couche 44 d'épaisseur suffisante pour que le mode guidé par la couche 12 ait un champ évanescent négligeable au niveau de la couche structurée 42, ce qui permet de ne pas perturber la propagation du mode guidé.

Le dispositif selon l'invention peut comprendre des constituants photoluminescents 20 qui émettent, quand ils sont excités, sur des longueurs d'onde différentes pour l'excitation d'éléments chromophores 14 de types différents. Ces constituants 20 différents peuvent être mélangés, ou séparés dans des zones 34 différentes.

De nombreuses modifications peuvent être apportées aux réalisations décrites et représentées : par exemple, les constituants photoluminescents 20 peuvent former une couche très mince déposée à la surface d'une couche guidante préexistante, ce qui permet de capter dans cette couche de la luminescence guidée par la partie évanescente du mode guidé, et de bien localiser la couche de constituants 20 pour favoriser les effets précités d'anti-résonance verticale pour la luminescence guidée et de résonance verticale pour la lumière d'excitation primaire.

Quand la fluorescence émise par les éléments chromophores est captée par une matrice de photodétecteurs CCD ou CMOS, on prévoit avantageusement des moyens de filtrage de la lumière d'excitation primaire et/ou de la luminescence guidée et qui laissent passer au moins une majeure partie de la fluorescence émise.

Ces moyens de filtrage peuvent être formés d'une ou de plusieurs couches absorbantes et/ou d'un filtre interférentiel multicouche (par exemple miroir de Bragg correctement centré).

## Revendications

1. Dispositif de type biopuce comprenant un substrat (10) dont une couche superficielle forme un guide d'onde planaire (12), ladite couche superficielle portant des éléments chromophores dans une zone (16, 36) de support des éléments chromophores, lesdits éléments chromophores étant propres à émettre une fluorescence en réponse à une excitation lumineuse, le guide d'onde planaire (12) contenant des constituants photoluminescents (20) propres à émettre une luminescence à une ou des longueurs d'onde d'excitation des éléments chromophores (14) quand ces constituants (20) sont eux-mêmes excités par une lumière d'excitation primaire (22), la luminescence émise par les constituants (20) étant générée et guidée dans le guide d'onde planaire (12) pour l'excitation des éléments chromophores (14), **caractérisé en ce que** les constituants photoluminescents (20) sont disposés dans le guide d'onde planaire (12) dans des zones séparées (18, 34) et adjacentes aux zones (16, 36) de support des éléments chromophores (14) dans le plan du guide d'onde planaire (12).

2. Dispositif selon la revendication 1, **caractérisé en ce que** les constituants photoluminescents comprennent des polymères, des molécules organiques, des ions luminescents, ou des boîtes quantiques ou sont formés dans une structure hétérogène semi-conductrice (40) à couches.

3. Dispositif selon l'une des revendications précédentes, **caractérisé en ce que** des moyens (28) de filtrage en longueur d'onde sont prévus dans le guide d'onde planaire (12) pour éliminer de la luminescence (26) émise par les constituants photoluminescents (20) les longueurs d'onde identiques à ou voisines de celles de la fluorescence émise par les éléments chromophores (14).

4. Dispositif selon la revendication 3, **caractérisé en ce que** les moyens de filtrage (28) sont situés dans les zones (16) de support des éléments chromophores (14).

5. Dispositif selon la revendication 3, **caractérisé en ce que** les moyens de filtrage (28) sont situés entre des zones (18) comportant des composants photoluminescents (20) et des zones (16) de support des éléments chromophores (14).

6. Dispositif selon l'une des revendications à 5, **caractérisé en ce que** les moyens de filtrage (28) sont constitués par des séries de rainures, des cristaux photoniques ou des cavités optiques formées dans le guide d'onde planaire (12).

7. Dispositif selon la revendication 6, **caractérisé en ce que** les rainures des sont à contraste d'indice faible ou de forme sinusoïdale peu profonde et sont formées en surface ou dans des sous-couches intermédiaires du guide d'onde planaire (12)

8. Dispositif selon l'une des revendications à 5, **caractérisé en ce que** les moyens de filtrage comprennent des matériaux inclus dans le guide d'onde planaire (12) et absorbant les longueurs d'onde identiques à ou voisines de celles de la fluorescence émise par les éléments chromophores (14).

9. Dispositif selon l'une des revendications 3 à 5, **caractérisé en ce que**, la longueur d'onde d'excitation des éléments chromophores (14) étant inférieure à la longueur d'onde de la fluorescence émise par ces éléments, le filtrage est réalisé par le guide d'onde planaire (12) lui-même, celui-ci ayant une longueur d'onde de coupure du mode guidé comprise entre la longueur d'onde d'excitation des éléments chromophores et la longueur d'onde de la fluorescence émise par ces éléments.

10. Dispositif selon la revendication 1 ou 2, **caractérisé en ce que** les constituants photoluminescents sont répartis de façon sensiblement uniforme dans le guide d'onde planaire (12).

11. Dispositif selon l'une des revendications précédentes, **caractérisé en ce que** le guide d'onde planaire (12) contient des constituants photoluminescents différents émettant une luminescence sur des longueurs d'onde différentes pour l'excitation d'éléments chromophores de types différents.

12. Dispositif selon la revendication 11, **caractérisé en ce que** les constituants photoluminescents différents sont mélangés entre eux dans le guide d'onde planaire (12).

13. Dispositif selon la revendication 11, **caractérisé en ce que** les constituants photoluminescents d'un type donné émettant sur une longueur d'onde donnée sont séparés d'autres constituants photoluminescents émettant sur des longueurs d'onde différentes.

14. Dispositif selon la revendication 13, **caractérisé en ce que** les constituants photoluminescents de types différents sont dans des zones différentes du guide d'onde planaire (12) ou dans des couches différentes superposées de ce guide d'onde.

15. Dispositif selon l'une des revendications précédentes, **caractérisé en ce que** le substrat (10) comprend, sous une partie au moins du guide d'onde planaire (12), une couche (32) de matière absorbant les photons émis depuis le guide d'onde (12) aux longueurs d'onde de la lumière d'excitation primaire (22) et/ou de la lumière d'excitation des éléments chromophores (14).

16. Dispositif selon l'une des revendications précédentes, **caractérisé en ce que** le substrat (10) comprend, sous une zone (16) de support des éléments chromophores (14), une couche intermédiaire structurée (42) qui réfléchit au moins partiellement la fluorescence émise par les éléments chromophores et qui comporte des zones d'épaisseur ou de hauteur différentes permettant de faire varier l'intensité de cette fluorescence par interférence destructive ou constructive.

17. Dispositif selon l'une des revendications précédentes, **caractérisé en ce que** le guide d'onde planaire comprend, dans ou au voisinage d'au moins une zone (18, 34) contenant des constituants photoluminescents (20), des moyens (30, 38) formant réflecteur pour le guidage de la luminescence émise (26) vers au moins une zone (16) de support des éléments chromophores (14).

18. Dispositif selon la revendication 17, **caractérisé en ce que** les moyens formant réflecteur comprennent un revêtement réfléchissant (38), par exemple métallique, formé sur la tranche du guide d'onde planaire (12), ou bien des rainures (30) formées dans le guide d'onde planaire (12) ou des cristaux photoniques bidimensionnels formés dans ce guide d'onde planaire.

19. Dispositif selon l'une des revendications précédentes, **caractérisé en ce que** le substrat (10) comprend, sous le guide d'onde planaire (12) contenant les constituants photoluminescents (20), une couche de matière réfléchissant les longueurs d'onde de la luminescence émise.

20. Dispositif selon l'une des revendications précédentes, **caractérisé en ce que** le guide d'onde planaire (12) comprend des cavités résonantes formées par des couches réfléchissantes placées de part et d'autre des constituants photoluminescents (20).

21. Dispositif selon la revendication 20, **caractérisé en ce que** les constituants photoluminescents (20) sont placés au niveau d'un nœud de résonance verticale pour la luminescence émise.

22. Dispositif selon la revendication 20 ou 21, **caractérisé en ce que** les constituants photoluminescents (20) sont placés au niveau d'un ventre de résonance verticale pour la lumière d'excitation primaire.

23. Dispositif selon l'une des revendications précédentes, **caractérisé en ce que** des constituants photoluminescents (20) sont placés sous une couche réfléchissante (25), par exemple métallique, à un niveau correspondant à un nœud de résonance verticale pour la luminescence émise et sont éclairés par la lumière d'excitation primaire à travers la face (24) du substrat opposée à celle comportant ladite couche réfléchissante.

24. Dispositif selon l'une des revendications précédentes, **caractérisé en ce que** les constituants photoluminescents (20) sont posés en couche mince sur une couche guidante du substrat.

25. Dispositif selon l'une des revendications 1 à 23, **caractérisé en ce que** les constituants photoluminescents sont formés dans une structure semi-conductrice multicouche fixée au substrat (10) et à laquelle est couplée optiquement une couche guidante (12) déposée sur le substrat et de support des éléments chromophores (14).

26. Dispositif selon l'une des revendications précédentes, **caractérisé en ce que** sa couche superficielle (12) est recouverte d'une couche d'une épaisseur de plusieurs dizaines de µm, comportant des orifices formant des micro-puits de réception d'échantillons.

## Patentansprüche

1. Vorrichtung vom Typ eines Biochips mit einem Substrat (10), von dem eine Oberflächenschicht einen planaren Wellenleiter (12) bildet, wobei die Oberflächenschicht chromophore Elemente in einer Zone (16, 36) zum Tragen der chromophoren Elemente trägt, wobei die chromophoren Elemente geeignet sind, als Reaktion auf eine Anregung durch Licht eine Fluoreszenz auszustrahlen, wobei der planare Wellenleiter (12) photolumineszente Bestandteile (20) enthält, die geeignet sind, eine Lumineszenz mit einer oder mehreren Wellenlängen zum Anregen der chromophoren Elemente (14) auszustrahlen, wenn die Bestandteile (20) selbst durch ein primäres Anregungslicht (22) angeregt werden, wobei die von den Bestandteilen (20) ausgestrahlte Lumineszenz zum Anregen der chromophoren Elemente (14) im planaren Wellenleiter (12) erzeugt und geleitet wird, **dadurch gekennzeichnet, daß** die photolumineszenten Bestandteile (20) im planaren Wellenleiter (12) in getrennten und an die Zone (16, 36) zum Tragen der chromophoren Elemente (14) angrenzenden Zonen (18, 34) in der Ebene des planaren Wellenleiters (12) angeordnet sind.

2. Vorrichtung gemäß Anspruch 1, **dadurch gekennzeichnet, daß** die photolumineszenten Bestandteile Polymere, organische Moleküle, lumineszente Ionen oder Quantenpunkte aufweisen oder in einer heterogenen, Schichten aufweisenden Halbleiterstruktur (40) gebildet sind.

3. Vorrichtung gemäß einem der vorangehenden Ansprüche, **dadurch gekennzeichnet, daß** im planaren Wellenleiter (12) Mittel (28) zum Filtern von Wellenlängen vorgesehen sind, um aus der von den photolumineszenten Bestrandteilen (20) ausgestrahlten Lumineszenz (26) Wellenlängen herauszufiltern, die mit jenen der von den chromophoren Elementen (14) ausgestrahlten Fluoreszenz identisch sind oder diesen nahe sind.

4. Vorrichtung gemäß Anspruch 3, **dadurch gekennzeichnet, daß** die Filtermittel (28) in den Zonen (16) zum Tragen der chromophoren Elemente (14) gelegen sind.

5. Vorrichtung gemäß Anspruch 3, **dadurch gekennzeichnet, daß** die Filtermittel (28) zwischen photolumineszente Bestandteile (20) aufweisenden Zonen (18) und Zonen (16) zum Tragen der chromophoren Elemente (14) gelegen sind.

6. Vorrichtung gemäß einem der Ansprüche 3 bis 5, **dadurch gekennzeichnet, daß** die Filtermittel (28) aus Reihen von Rillen, photonischen Kristallen oder im planaren Wellenleiter (12) gebildeten optischen Hohlräumen bestehen.

7. Vorrichtung gemäß Anspruch 6, **dadurch gekennzeichnet, daß** die Rillen einen schwachen Indexkontrast aufweisen oder von Sinusform geringer Tiefe sind und an der Oberfläche oder in Zwischenschichten des planaren Wellenleiters (12) gebildet sind.

8. Vorrichtung gemäß einem der Ansprüche 3 bis 5, **dadurch gekennzeichnet, daß** die Filtermittel im planaren Wellenleiter (12) enthaltene und die Wellenlängen, die mit jenen der von den chromophoren Elementen (14) ausgestrahlten Fluoreszenz identisch sind oder diesen nahe sind, absorbierende Materialien aufweisen.

9. Vorrichtung gemäß einem der Ansprüche 3 bis 5, **dadurch gekennzeichnet, daß** die Anregungswellenlänge der chromophoren Elemente (14) kleiner als die Wellenlänge der von diesen Elementen ausgestrahlten Fluoreszenz ist und das Filtern vom planaren Wellenleiter (12) selbst durchgeführt wird, wobei dieser eine Grenzwellenlänge des geführten Modus aufweist, die zwischen der Anregungswellenlänge der chromophoren Elemente und der Wellenlänge der von diesen Elementen ausgestrahlten Fluoreszenz liegt.

10. Vorrichtung gemäß Anspruch 1 oder 2, **dadurch gekennzeichnet, daß** die photolumineszenten Bestandteile im Wesentlichen gleichmäßig im planaren Wellenleiter (12) verteilt sind.

11. Vorrichtung gemäß einem der vorangehenden Ansprüche, **dadurch gekennzeichnet, daß** der planare Wellenleiter (12) unterschiedliche photolumineszente Bestandteile aufweist, die eine Lumineszenz mit unterschiedlichen Wellenlängen ausstrahlen, um chromophore Elemente unterschiedlicher Typen anzuregen.

12. Vorrichtung gemäß Anspruch 11, **dadurch gekennzeichnet, daß** die unterschiedlichen photolumineszenten Bestandteile im planaren Wellenleiter 12) untereinander vermischt sind.

13. Vorrichtung gemäß Anspruch 11, **dadurch gekennzeichnet, daß** die photolumineszenten Bestandteile eines bestimmten Typs, die auf einer bestimmten Wellenlänge ausstrahlen, von anderen photolumineszenten Bestandteilen, die auf anderen Wellenlängen ausstrahlen, getrennt sind.

14. Vorrichtung gemäß Anspruch 13, **dadurch gekennzeichnet, daß** sich die photolumineszenten Bestandteile unterschiedlicher Typen in unterschiedlichen Zonen des planaren Wellenleiters (12) oder in unterschiedlichen übereinanderliegenden Schichten dieses Wellenleiters befinden.

15. Vorrichtung gemäß einem der vorangehenden Ansprüche, **dadurch gekennzeichnet, daß** das Substrat (10) wenigstens unter einem Teil des planaren Wellenleiters (12) eine Schicht (32) aus die vom Wellenleiter (12) aus mit den Wellenlängen des primären Anregungslichts (22) und/oder des Anregungslichts der chromophoren Elemente (14) ausgestrahlten Photonen absorbierendem Material aufweist,.

16. Vorrichtung gemäß einem der vorangehenden Ansprüche, **dadurch gekennzeichnet, daß** das Substrat (10) unter einer Zone (16) zum Tragen chromophorer Elemente (14) eine strukturierte Zwischenschicht (42) aufweist, die wenigstens teilweise die durch die chromophoren Elemente ausgestrahlte Fluoreszenz reflektiert und die Zonen verschiedener Dicken oder Höhen aufweist, die ermöglichen, die Stärke dieser Fluoreszenz durch destruktive oder konstruktive Interferenz zu variieren.

17. Vorrichtung gemäß einem der vorangehenden Ansprüche, **dadurch gekennzeichnet, daß** der planare Wellenleiter in oder in der Nähe wenigstens einer photolumineszente Bestandteile (20) enthaltenden Zone (18, 34) Mittel (30, 38) aufweist, die einen Reflektor zum Führen der in Richtung wenigstens einer Zone (16) zum Tragen von chromophoren Elementen (14) ausgestrahlten Lumineszenz (26) bilden.

18. Vorrichtung gemäß Anspruch 17, **dadurch gekennzeichnet, daß** die einen Reflektor bildenden Mittel eine am Rand des planaren Wellenleiters (12) gebildete, zum Beispiel metallische, reflektierende Beschichtung (38) oder im planaren Wellenleiter (12) gebildete Rillen (30) oder in diesem planaren Wellenleiter gebildete zweidimensionale photonische Kristalle aufweisen.

19. Vorrichtung gemäß einem der vorangehenden Ansprüche, **dadurch gekennzeichnet, daß** das Substrat (10) unter dem die photolumineszenten Bestandteile (20) enthaltenden planaren Wellenleiter (12) eine Materialschicht aufweist, die die Wellenlängen der ausgestrahlten Lumineszenz reflektiert.

20. Vorrichtung gemäß einem der vorangehenden Ansprüche, **dadurch gekennzeichnet, daß** der planare Wellenleiter durch reflektierende Schichten gebildete Resonanzräume aufweist, die beiderseits der photolumineszenten Bestandteile (20) angeordnet sind.

21. Vorrichtung gemäß Anspruch 20, **dadurch gekennzeichnet, daß** die photolumineszenten Bestandteile (20) im Bereich eines vertikalen Resonanzknotens für die ausgestrahlte Lumineszenz abgeordnet sind.

22. Vorrichtung gemäß Anspruch 20 oder 21, **dadurch gekennzeichnet, daß** die photolumineszenten Bestandteile (20) im Bereich eines vertikalen Resonanzbauchs für das primäre Anregungslicht angeordnet sind.

23. Vorrichtung gemäß einem der vorangehenden Ansprüche, **dadurch gekennzeichnet, daß** die photolumineszenten Bestandteile (20) unter einer zum Beispiel metallenen reflektierenden Schicht (25) in einem Bereich angeordnet sind, der einem vertikalen Resonanzknoten für die ausgestrahlte Lumineszenz entspricht, und durch das primäre Anregungslicht durch die Seite (24) des Substrats hindurch beleuchtet werden, die der die reflektierende Schicht aufweisenden gegenüber liegt.

24. Vorrichtung gemäß einem der vorangehenden Ansprüche, **dadurch gekennzeichnet, daß** die photolumineszenten Bestandteile (20) als Dünnschicht auf eine leitende Schicht des Substrats aufgebracht sind.

25. Vorrichtung gemäß einem der Ansprüche 1 bis 23, **dadurch gekennzeichnet, daß** die photolumineszenten Bestandteile in einer mehrschichtigen Halbleiterstruktur gebildet sind, die auf dem Substrat (10) befestigt ist und an die eine auf das Substrat aufgebrachte und chromophore Elemente (14) tragende leitende Schicht (12) optisch gekoppelt ist.

26. Vorrichtung gemäß einem der vorangehenden Ansprüche, **dadurch gekennzeichnet, daß** deren Oberflächenschicht (12) mit einer Schicht mit einer Dicke von mehreren Zehnereinheiten von µm bedeckt ist, die Mikrosenken zur Aufnahme von Proben bildende Löcher aufweist.

## Claims

1. Biochip device comprising a substrate (10) having a surface layer forming a planar waveguide (12). said surface layer carrying chromophore elements (14) in a zone (16, 36) carrying the chromophore elements, said chromophore elements being suitable for emitting fluorescence in response to an excitation light, wherein the planar waveguide contains photoluminescent constituents (20) suitable for emitting luminescence at one or more excitation wavelengths of the chromophore elements (14) when said constituents (20) are themselves excited by a primary excitation light (22), the luminescence emitted by the constituents (20) being generated and guided in the planar waveguide (12) to excite the chromophore elements (14),
**characterized in that** the photoluminescent constituents (20) are disposed in the planar waveguide (12) in separate zones (18, 34) adjacent to the zones (16, 36) carrying the chromophore elements (14) in the plane of the planar waveguide (12) and further wherein wavelength filter means are provided in the planar waveguide to eliminate the luminescence emitted by the photoluminescent constituents at wavelengths that are identical or close to the wavelengths of the fluorescence emitted by the chromophore elements.

2. Device according to claim 1, wherein the photoluminescent constituents comprise polymers, organic molecules, luminescent ions, or quantum boxes, or they are formed in a layered semiconductor heterostructure.

3. Device according to any one of the preceding claims, wherein wavelength filter means (28) are provided in the planar waveguide (12) to eliminate the luminescence (26) emitted by the photoluminescent constituents (20) at wavelengths that are identical or close to the wavelengths of the fluorescence emitted by the chromophore elements (14).

4. Device according to claim 3, wherein the filter means (28) are situated in the zones (16) for carrying the chromophore elements (14).

5. Device according to claim 3, wherein the filter means (28) are situated between zones (18) including the photoluminescent components (20) and the zones (18) for carrying the chromophore elements.

6. Device according to any one of claims 3 to 5, wherein the filter means (28) are constituted by series of grooves, by photonic crystals, or by optical cavities formed in the planar waveguide (12).

7. Device according to claim 6, wherein the grooves have low index contrast or are of shallow sinusoidal shape, and are formed on the surface or in intermediate sublayers of the planar waveguide (12).

8. Device according to any one of claims 3 to 5, wherein the filter means comprise materials included in the planar waveguide (12) that are absorbent at wavelengths that are identical or close to those of the fluorescence emitted by the chromophore elements (14).

9. Device according to any one of claims 3 to 5, wherein, since the excitation wavelength of the chromophore elements (14) is shorter than the wavelength of the fluorescence emitted by said elements, the filtering is performed by the planar waveguide (12) itself, said waveguide having a cut-off wavelength for its guided mode that lies between the excitation wavelength of the chromophore elements and the wavelength of the fluorescence emitted by said elements.

10. Device according to claim 1 or 2, wherein the photoluminescent constituents are distributed in substantially uniform manner within the planar waveguide (12).

11. Device according to any one of the preceding claims, wherein the planar waveguide (12) contains different photoluminescent constituents emitting luminescence at different wavelengths in order to excite chromophore elements of different types.

12. Device according to claim 11, wherein the different photoluminescent constituents are mixed together in the planar waveguide (12).

13. Device according to claim 11, wherein the photoluminescent constituents of a given type emitting at a given wavelength are separate from other photoluminescent constituents emitting on different wavelengths.

14. Device according to claim 13, wherein the photoluminescent constituents of different types are in different zones of the planar waveguide (12), or are in different superposed layers of this waveguide.

15. Device according to any one of the preceding claims, wherein, beneath at least a portion of the planar waveguide (12), the substrate (10) includes a layer (32) of material absorbing the photons emitted from the waveguide (12) at the wavelengths of the primary excitation light (22) and/or of the excitation light for the chromophore elements (14).

16. Device according to any one of the preceding claims, wherein, beneath a zone (16) for carrying chromophore elements (14), the substrate (10) includes a structured intermediate layer (42) that reflects at least part of the fluorescence emitted by the chromophore elements and that includes zones of different thicknesses or heights enabling the intensity of said fluorescence to be caused to vary by destructive or constructive interference.

17. Device according to any one of the preceding claims, wherein, in the vicinity of at least one zone 18,34) containing photoluminescent constituents (20), the planar waveguide includes reflector-forming means (30, 38) for guiding the emitted luminescence (26) towards at least one zone (16) for carrying chromophore elements (14).

18. Device according to claim 17, wherein the reflector-forming means comprise a reflective coating (38), e.g. metallic, formed on the edge of the planar waveguide (12), or grooves (30) formed in the planar waveguide (12), or two-dimensional photonic crystals formed in this planar waveguide.

19. A device according to any one of the preceding claims, wherein, beneath the planar waveguide (12) containing the photoluminescent constituents (20), the substrate includes a layer of material that is reflective at the wavelengths of the emitted luminescence.

20. Device according to any one of the preceding claims, wherein the planar waveguide (12) includes resonant cavities formed by reflective layers placed on either side of the photoluminescent constituents (20).

21. Device according to claim 20, wherein the photoluminescent constituents (20) are placed at the level of a vertical resonance node for the emitted luminescence.

22. Device according to claim 20 or 21, wherein the photoluminescent constituents (20) are placed at the level of a vertical resonance antinode for the primary excitation light.

23. Device according to any one of the preceding claims, wherein the photoluminescent constituents (20) are placed under a reflective layer (25), e.g. metallic, at a level corresponding to a vertical resonance node for the emitted luminescence, and are illuminated by the primary excitation light through the face (24) of the substrate opposite from its face including said reflective layer.

24. Device according to any one of the preceding claims, wherein the photoluminescent constituents (20) are placed in a thin layer on a guiding layer of the substrate.

25. Device according to any one of claims 1 to 23, wherein the photoluminescent constituents are formed in a multilayer semiconductor structure secured to the substrate (10) and optically coupled to a guiding layer (12) deposited on the substrate for the purpose of carrying the chromophore elements (14).

26. Device according to any one of the preceding claims, wherein its surface layer (12) is covered in a layer having a thickness of several tens of micrometers, including orifices forming microwells for receiving samples.
